# EUROPEAN PATENT SPECIFICATION

(11) **EP 0 735 955 B1**
(45) Date of publication and mention of the grant of the patent: **01.10.1997**
(21) Application number: 95903878.7
(22) Date of filing: 21.12.1994
(51) Int. Cl.: B44C 5/04, C09J 7/02, D21H 27/20, B32B 7/06

(54) **SELF-ADHESIVE WALLCOVERINGS**
SELBSTKLEBENDE WANDBEKLEIDUNGEN
REVETEMENTS MURAUX AUTO-COLLANTS

(30) Priority: 21.12.1993 GB 9326154
(43) Date of publication of application: 09.10.1996
(73) Proprietor: FORBO-CP LIMITED, Cramlington, Northumberland NE23 8AQ (GB)
(72) Inventor: WILLIAMS, David, Anthony, Glanton Alnwick NE66 4AS (GB); WARWICK, Peter, Whitley Bay Tyne & Wear NE25 8NP (GB); CHARLTON, John, Thomas, Northumberland NE24 2PH (GB)
(74) Representative: Jones, Helen Marjorie Meredith
(86) International application number: GB9402791
(87) International publication number: WO9517312

(56) References cited:
- EP-A- 0 103 407
- EP-A- 0 569 921
- WO-A-93/06301
- WO-A-93/22391

## Description

This invention relates to self-adhesive wall-coverings which are self-wound and which comprise a decorative sheet material which carries a layer of pressure sensitive adhesive which is applied in the form of a roll.

In particular, this invention relates to self-wound webs of wall-covering material having a width generally less than 0.5m, for application as a border. It is well known to apply a relatively narrow strip of wall-covering material as a border. Generally the relatively narrow strip of wall-covering material is applied horizontally around the walls of a room, being adhered onto the wall-covering which is already provided on the walls, and which may be for example paint or varnish which is directly on plaster or wood surfaces, or wallpaper which is already in place.

Conventional sheet material for use as a border is sold in rolls of sheet material which require wet adhesive to be applied to the back of the sheet material for application to a wall. These products are inconvenient to use, since the handling of the paste and brushes or water troughs required is relatively time consuming and may require protection of furniture and carpets. Also, handling of both the wet adhesive and the sheet material when coated with the wet adhesive is inconvenient as the wet products become soft.

An alternative type of border used to overcome this problem comprises self-adhesive "peel and stick" rolls of sheet substrate. These are provided with a release sheet on the surface of the adhesive which is peeled from the back of the sheet substrate to expose the adhesive immediately prior to adhesion to the walls. Thus, a roll can be unrolled and applied to a wall surface without wetting being necessary. The release sheet is cumbersome to remove during the application process and is a costly part of the product, which is discarded as waste after application. Additionally, the sheet substrate is particularly problematic on over-painted or varnished wood or plaster because in order to adhere this type of product to these surfaces, they are produced using adhesives which do not enable repositioning of the substrate without causing damage to the painted surface.

There are additional problems applying borders over self-adhesive wall coverings, which are now available. Where the wallcovering is provided as a self-wound roll, that is having no release sheet, the self wound roll can be unrolled because of the presence of a release layer on the decorative surface of the wall-covering. Thus, after application to a wall, the release coat remains in position on the decorative wall surface. There is therefore an additional difficulty in providing a self-adhesive border which is a self-wound product and which will adhere to a wall-covering surface provided with a release coat. Neither "peel and stick" self-adhesive borders, nor wet adhesive borders tend to have sufficient adhesion to adhere to such release coated wallcoverings and yet can still be repositionable without causing damage.

In WO-A-9306301 a self-wound self-adhesive wall covering is formed of a substrate which is susceptible to dimensional change upon change in moisture content of its environment and has a very high resistance to delamination, usually having a layer comprising primarily cellulosic fibres with a minor content of hydrophobic fibrous material. The moisture content of a package containing the roll of wall-covering is controlled so as to optimise the dimension of the produce as it is removed from the package applied to a wall and during the open time before maximum adhesion develops. The adhesive is selected to allow repositioning but provide build in adhesive strength such that any change in the dimensions of the substrate is resisted. The exemplified adhesive is an acrylate type adhesive, but is plasticiser-sensitive, giving reduced peel strength values after contact with plasticisers-containing vinyl substrates.

In the present invention, the inventors have found that a wall-covering sheet substrate suitable for use as a border can be provided which overcomes the problems of the prior art and which is self-wound.

In accordance with the present invention there is provided a continuous web comprising in sequence
a pressure sensitive adhesive layer,
a substrate layer which comprises hydrophillic fibrous material,
a decorative surface layer and
a release surface,
the web being wound into a roll by consecutive winding, the adhesive layer of one winding being received on the release surface of the adjacent winding,
   characterised in that the initial adhesion (peel) strength of the web to steel is no greater than 7N/25mm and the adhesion (peel) to steel after 24 hours dwell time is higher than the initial adhesion and at least 5N/25mm and no greater than 12N/25mm, the internal delamination strength of the substrate being greater than the initial adhesion strength of the web to steel and the adhesive B is plasticiser resistant such that the adhesive retains at least 70% of its adhesion strength after contact with a PVC coated wallcovering having a dry coating weight of 90g/m² and comprising plasticiser in an amount of at least 20% by weight at 23±2°C for 3 weeks, at 55±2% RH.

Preferably, the adhesion of the web to steel after 24 hours dwell time is at least 100% of the initial adhesion. After 24 hours dwell time the adhesion to steel is preferably at least 7N/25mm. Preferably the adhesion to steel is at least 120% of the initial adhesion after 24 hours dwell time.

Thus, the present invention provides a self-adhesive wallcovering which is self-wound, does not require removal of a layer for waste, nor the use of wet adhesives and which can be repositioned on painted or varnished surfaces.

Preferably the adhesive is plasticiser resistant to the extent that it retains at least 80%, preferably at least 90%, or even at least 95% of its adhesion even on contact of the adhesive as a layer having a dry weight of 30g/m² at ambient temperature (23±2°C) over 3 weeks. These measurements are based on a vinyl-based coating having a dry coating weight 90g/m² and comprising plasticiser in an amount of 20% by weight.

DOP plasticiser has been found to be particularly problematic and therefore the test may be based on adhesion strength after contact with a PVC coated wallcovering as described above which comprises 20% by weight DOP plasticiser.

Preferably the adhesive is one which builds to a higher final adhesion on vinyl-based surfaces, than on over-painted or over-varnished wood or plaster, and preferably, the rate of build of the adhesion on vinyl surfaces is more rapid than on non-vinyl-based surfaces.

The product of this invention may be used on all vinyl-based substrates such that the rate of build of adhesion after one hour is usually higher than on, for instance, most paint surfaces, thus enabling adequate bonding to occur on all these surfaces, yet allowing removal and reapplication of the border within this period without damage to the wallcovering or paint substrate.

Preferably the initial adhesion of the web is at least 1N/25mm. Most preferably at least 2N/25mm, preferably no greater than 5N/25mm.

Generally, the adhesion (peel) strength of the bond between the adhesive layer and the release layer of the adjacent winding will be at least 0.05 N/25mm, preferably at least 0.1N/25mm. Generally it will be no greater than 5N/25mm, preferably no greater than 3N/25mm. Preferably, the adhesion will be no greater than 2N/25mm and most preferably no greater than 1N/25mm as measured by the technique described below.

The invention is particularly directed to wall-covering material to be adhered to vinyl-coated and optionally release-coated surfaces.

A particular problem arises where a web is to be adhered to a polymer-coated wallcovering such as a vinyl coated wallcovering. Such vinyl coated wallcoverings include for example PVC- or polyvinyl acetate-based wallcoverings, optionally having a release coat. It has been found that plasticisers which are incorporated in these types of coatings for example phthalates, such as DOP (dioctylphalate) or DIOP (diisooctylphthalate), are often migratable and may have an adverse effect on the adhesion properties of most pressure sensitive adhesives during the working life of the product.

However, the present invention has been found to overcome these problems, in addition to providing a self-adhesive wall-covering strip which can be adhered onto any existing surface and even allows repositioning of the strip without damaging the existing surface, even when that surface comprises over-painted wood or plaster.

The substrate layer of the invention should have internal delamination strength greater than the initial adhesion strength to steel, ie. preferably at least 7N/25mm. This, in combination with the adhesive properties described above enables the web to be repositioned without damage to the web. Most conventional wallcovering substrates are unlikely to meet this requirement.

The substrate includes some hydrophillic fibrous material which is generally cellulose based, such as cellulose, cellulose acetate or viscose, preferably being viscose. Thus, the substrate may be a mechanical base paper or a mixture of hydrophilic material with synthetic fibres and/or binder. The amount of hydrophilic material in the hydrophilic substrate will generally be at least 10%, preferably at least 20% and most preferably at least 40%. Generally, the amount of hydrophilic material in the hydrophilic substrate layer will be no greater than 95%, preferably no greater than 80% by weight of the substrate. A non-hydrophilic base can also be used and this will provide high dimensional stability.

The substrate layer will generally also include some synthetic and/or mineral material, generally fibrous. Such "hydrophobic" materials may be included in the composition for the hydrophilic substrate layer. Generally, they will be incorporated in amounts of at least 3% by weight, preferably at least 10% and most preferably at least 15% by weight. The hydrophobic material is usually included in an amount no greater than 60% by weight, preferably no greater than 50% by weight and most preferably no greater than 30% by weight of a layer. Preferred materials are for example glass or other mineral fibres or synthetic fibres such as polyester polymers and copolymers of alpha-olefin such as ethylene and propylene. Synthetic fibres are preferred as they are less hazardous.

The total content of hydrophilic/hydrophobic material which is preferably fibrous material, in the hydrophilic substrate layer may be up to 100% but is generally no greater than 98%, preferably no greater than 95% and most preferably no greater than 90% by weight. When the substrate comprises less than 100% by weight hydrophilic/hydrophobic material, the remainder comprises for example a filler and/or pigment and/or binder. Suitable fillers and pigments are those which are conventionally used in cellulosic substrates for example clays and chalks.

However, preferred binders are synthetic binders such as polyvinyl alcohol, polyvinyl acetate and/or polyvinyl acrylate, polyvinylidene dichloride and/or SBR latex. A suitable binder is generally included in amounts of at least 5%, preferably at least 15%, most preferably at least 20% by weight of the hydrophilic substrate layer, generally being no greater than 40% and preferably being no greater than 35% by weight.

The substrate will comprise at least hydrophobic or synthetic binder material, in order to provide the required internal delamination strength. Preferably, the substrate comprises at least 3%, more preferably at least 5% and most preferably at least 7% or even at least 10% by weight binder and/or hydrophobic material.

The width of the continuous web will generally be no greater than 0.5m. When the width of the web is greater than 0.25m, or even 0.2m, preferably the substrate layer comprises a web having dimensional stability. Such a web may be provided using a substrate layer which is substantially free from hydrophilic material and is preferably wholly synthetic material, or may be provided as described in PCT/GB92/01685.

The thickness of the substrate is generally no less than 110µm, preferably at least 115µm and most preferably at least 120µm. The total thickness of pressure sensitive adhesive layer, substrate layer, decorative surface layer and release surface layer is generally at least 180µm, preferably at least 190µm, or even at least 200µm.

The invention is particularly directed to a product in which the decorative layer comprises a polymeric material, generally a PVC layer, thereby producing a product with all the beneficial properties of a conventional vinyl wallcovering i.e. which is washable, has good durability and enables easy embossing, in addition to easy dry-on application to wall surfaces and good dimensional stability. Examples of synthetic resin materials which may be used in the coating include polyvinyl chloride, polyethylene, polypropylene, polyolefins and other similar polymers. Foamed synthetic polymers may be for example, expanded polystyrene.

The decoration on the surface of the decorative layer may have been provided by any of the conventionally known means for example by printing, embossing and/or coating. It may be provided by, or printed etc on, a vinyl, foamed or unfoamed coating which comprises the decorative layer on the surface of the hydrophilic substrate layer. Alternatively the decorative layer may be provided directly onto the surface on one side of the substrate layer by the conventional means, by printing, embossing and/or coating.

The release layer may be any material which will enable the wall covering roll to be unwound without transfer of adhesive to the decorative-surface layer or damage to any part of the product. When the adhesive has been selected, the release layer must be selected to produce the required adhesion (peel) strength for the bond between the adhesive layer and the release surface of the adjacent winding of the roll.

The release properties on the roll are provided without the use of a separate release paper which needs to be peeled from the border prior to use and the adhesive layer of one winding is adhered directly to the release layer of the adjacent winding. Any conventional release substrate may be used. Generally a release chemical will be applied on to the decorative surface of the web. A preferred release coat is a coating of silicone based polymer, preferably a cross-linked silicone polymer on the decorative surface layer. Chemical release coatings are generally applied to the decorative surface by gravure printing. To give adequate release properties to the roll, the dry weight of silicone should preferably be above 0.3g/m², preferably at least 0.5g/m² and most preferably at least 1.0g/m².

Release properties may also be effected by use of a suitable texture/emboss finish on the decorative surface layer without the need to use, for instance, a silicone based polymer coating or other chemical release coating.

The pressure sensitive adhesive layer comprises an adhesive which has sufficient adhesion to be adhered to the wall-covering material. Preferably, the adhesive is also one which will be repositionable on the wall-covering substrate without damage to the product or substrate which may be painted plaster walls, wallpaper and vinyl wallcoverings and also other surfaces such as wood which is over-painted or over-varnished.

Thus, the tack properties of the adhesive will be such as to allow easy repositioning of the web without damage to the web or the wall covering material to which it is to be adhered and will have sufficient build properties to prevent accidental removal or adhesion failure but which will still permit easy unwinding even after long periods of storage over a wide range of temperatures.

For best results the adhesive should have particular tack and peel adhesive properties. Preferably the adhesive also has good cohesive strength (as shown by resistance to shear). These properties can all be determined by FINAT tests (tests of the Federation International de Thermocollants sur Papiers et autres Supports). The measurements recorded below are determined by modified FINAT tests, as described:

The peel (adhesion) strength is measured using 180° peel tests on a test piece-having dimensions 100mm x 25mm. The substrate and adhesive coat are as described above for the cohesion tests. A sample is applied to a stainless steel surface and rolled in one direction only, five times with a 2kg rubber roller. Tests are carried out on samples with an initial dwell time that is a dwell time on the plate (before peeling) of 2 to 3 minutes; and a dwell time of 24 hours, respectively and the peel speed is 300 mm/min. Peel strength is recorded in N/25 mm. Again, these tests are carried out at 23 ± 2°C and at a relative humidity of 50 ± 5%.

Preferably, the adhesive must allow easy application to the wall and also easy removal and adjustment of the position of the wallcovering prior to its final positioning. In addition, the adhesion must strengthen with time, approaching a maximum for example, after up to about 24 hours. It has been found that using the particularly preferred adhesives, as the adhesion strengthens with time, so does the cohesion develop, to approach a maximum. The time between application and development of the maximum adhesion, the so-called open-time, inevitably tends to be relatively high with pressure sensitive adhesives and it is this property which can allow the wallcovering to bubble by an increase in area under changing conditions of humidity during the period after application to a wall when the adhesion and cohesion are low.

Tack is measured using a loop tack test with test pieces of 200mm x 20mm. The test conditions are as for the cohesion and peel tests. The bond area under test is 25mm x 25mm on a glass plate and the speed is 300mm/min.

Cohesive strength (resistance to shear) measurements are taken using a test piece with dimensions 110mm x 20mm. The test pieces comprise a substrate of 36µm "MELINEX" polyester film having a coating of the pressure sensitive adhesive under test at a coating rate to give a dry weight of 35g/m². A test piece is partially bonded to a standard (glass plate) surface, the bond area under test has dimensions 20mm x 20mm by rolling the test area with a roller. A 1.5kg weight is applied to one end of the sample hanging from the bottom of the vertical glass plate and the time taken for the bond to break under shear is recorded. The tests are carried out at 23 ± 2°C and 50% ± 5% RH.

Generally the cohesive strength of the adhesive will be at least 45 minutes, preferably at least 55 minutes and most preferably greater than 1 hour when tested for shear resistance in accordance with this test.

Preferably the adhesive properties will also provide products in which when two adhesive coated surfaces of the product touch one another they may be separated substantially without damage to the product.

Suitable adhesives may be produced from synthetic and/or natural products, the natural rubbers being compounded with tackifying resin. The most highly preferred type of adhesive will be an acrylic based adhesive such as a polyacrylate-based aqueous emulsion adhesive. A particularly preferred adhesive is an acrylate-based emulsion adhesive sold under the name of Cascotak ADP 21/494.

Generally, the adhesive will be present in the product at a dry weight of from 5 to 60 grammes per m², preferably above 10 g/m² and below 50 g/m² and most preferably at a weight of 20 to 40 grams per m², dry weight. However, the adhesion is affected by the thickness and stiffness of the substrate and the particular adhesive used and the amount of adhesive required is dependent upon these factors. In addition, the adhesion is also affected by the contact area of the wallcovering with the wall surface when in place on the wall. The contact area is affected, for example, by embossing and a large depth of embossing of the wall-covering or the surface to which it is to be adhered may reduce the contact considerably. Generally the contact area between the wall-covering and the surface to which it is adhered should be above 50% of the wallcoverings area, preferably at least 60% and most preferably at least 70%. When the contact area is low, generally, a higher coating weight of adhesive is required.

The present invention provides also a new process for producing a package containing a roll of wallcovering material in which there are applied to a web of hydrophilic substrate material, on one side a decorated surface layer and on the other side a layer of pressure sensitive adhesive and the product web is wound into rolls of successive winding with the pressure sensitive adhesive received onto a release surface of the adjacent winding in the product roll. The characteristics of the product are as described above.

In the process the adhesive coating is generally applied in the form of a water-based or non-aqueous solvent-based solution or an emulsion, or as a hot melt or in a radiation (UV or electron beam) curable form. Preferably the adhesive is water based as avoidance of non-aqueous solvents is environmentally desirable and avoids the provision of complicated solvent recovery apparatus and procedures. The use of water based systems also supplies the moisture and allows control of the moisture content of the final product without the incorporation into the process of an extra stage of humidification and/or drying, if such control is desired. The preferred adhesives are acrylic ester polymers, generally prepared and applied as an aqueous emulsion. The selection of an appropriate adhesive to obtain the desired properties in the final product as disclosed above is a matter of choice by a person skilled in the art selecting amongst available polymers, application rates and additives.

### Example 1

A substrate layer of "Varitess V191" (Trademark) having a dry weight of 92 g/m² and comprising 50% cellulose fibres, 20% polyester fibres, the remainder comprising mainly polyvinyl acetate binder and titanium dioxide/filler and having a wet expansion of 0.3% was coated with 90g/m² PVC plastisol comprising 100 parts by weight PVC resin; 67 parts by weight DOP plasticiser; 60 parts by weight filler, 19 parts by weight titanium dioxide and 2 parts by weight stabiliser. The wet expansion of the coated substrate is 0.2%.

The vinyl coated substrate was printed with a decorative pattern, and subsequently on top of the print during type printing process with a silicone release coat comprising 1.0 g/m² dry Rhodorsil 7334 (trademark) cross-linked with catalysts 62A and 62B from Rhone-Poulenc. The printed coated substrate was dried travelling at a rate of 60 metres per minute at a temperature of 135°C.

The printed coated web was then embossed at 100 metres per minute on a conventional hot embosser and an adhesive coating was applied at 60 metres per minute with 65 g/m² of an acrylic adhesive comprising Cascotak ADP 21/494 acrylic emulsion from Borden (UK) having a solids content of 50%, the dry weight coating thus being 32.5g/m². The adhesive coated web, after drying, was wound up into large "mother" rolls with a moisture content of 7% based on the total weight of the substrate and adhesive layer, determined by an IR sensor positioned on the web after the drying step, but before the winding step. The equilibrium moisture content at 23°C, 50%RH is 6%.

Smaller retail rolls were produced by perforating the roll with a "notched" circular knife during inspection, the smaller finished rolls being "broken off" at the perforated units in the mother roll. Immediately and up to 1 month later the rolls showed good release for winding with no damage to the product. These 5m x 140mm rolls were labelled and shrinkwrapped with polyolefin film and/or PVC film in the normal manner.

On testing after various periods of ageing it was found that the rolls reels could be unwound easily, that lengths could be easily applied, removed and re-applied several times without difficulty or damage to gloss, egg shell, matt emulsion and vinyl silk emulsion, painted surfaces, vinyl wallcovering, wallpaper and vinyl wallcovering having a silicone release coating applied to the surface.

In addition, the product could easily be separated from itself after two adhesive coated surfaces were stuck together without damage.

The product was subjected to the following environmental testing on all the above mentioned wall surfaces,
½ hour steam at 20°C (i.e. 100% RH)
½ hour ambient 20°C
7 hours at 20°C and 65-75% RH
4 hours at 25-30°C and 30-40% RH
12 hours ambient 15-20°C and 30-40% RH

The product was tested for 24 days on all the above mentioned substrates under these conditions and showed no signs of bubbling or expansion at the "intersecting seams" during the 76 hours at 30-40% RH at temperatures between 15 and 30°C. The steam condition represents the very high humidities to be found in bathrooms and kitchens.

The self-adhesive border was applied to the wall surfaces using light hand pressure only ensuring all air was excluded between the border and the wall/substrate by easily sweeping such air bubbles as in the case of conventional borders.

The product also has the advantage of being easier to cut and trim than wet applied borders, and easier to handle and apply than "peel and stick" borders with removable release paper and did not damage painted surfaces on successive re-applications when positioning. No "auxiliary" adhesive was necessary when applying to any of the substrates.

## Claims

1. A continuous web comprising in sequence
a pressure sensitive adhesive layer,
a substrate layer which comprises hydrophillic fibrous material,
a decorative surface layer and
a release surface, the web being wound into a roll by consecutive winding, the adhesive layer of one winding being received on the release surface of the adjacent winding,
characterised in that the initial adhesion (peel) strength of the web to steel is no greater than 7N/25mm and the adhesion (peel) to steel after 24 hours dwell time is higher than the initial adhesion and at least 5N/25mm and no greater than 12N/25mm, the internal delamination strength of the substrate is greater than the initial adhesion strength, and the adhesive is plasticiser resistant such that the adhesive retains at least 70% of its adhesion strength after contact of the adhesive as a layer having a dry weight of 30g/m² with a PVC coated wall covering having a dry coating weight of 90g/m² and comprising plasticiser in an amount of at least 20% by weight, at 23±2°C for 3 weeks, at 55+2% RH.

2. A continuous web according to claim 1 in which the adhesive is plasticiser resistant to retain at least 90% of its adhesion after said contact.

3. A continuous web according to claim 1 or claim 2 in which the web has a greater rate of build of adhesion strength on vinyl surfaces than on non-vinyl surfaces.

4. A continuous web according to any preceding claim in which the pressure sensitive adhesive layer comprises Cascotak ADP 21-494 acrylic emulsion.

5. A continuous web according to any preceding claim in which the release surface is provided by silicone, preferably having a dry weight of at least 1g/m².

6. A continuous web according to any preceding claim in which the substrate comprises a dimensionally stable substrate.

7. A continuous web according to any preceding claim having a width greater than 200mm, preferably greater than 300mm.

8. A continuous web according to any of claims 1 to 5 having a width up to 0.25 m.

9. A continuous web according to any preceding claim in which the decorative surface layer includes a layer of plastic material, preferably comprising PVC, applied to the web of hydrophilic substrate material by laminating a preformed film or, preferably, by application of a liquid composition, preferably a plastisol.

10. A method of use of a web according to any preceding claim in which the web is unwound from the roll and the adhesive layer is adhered to a polymer-coated wallcovering, preferably a vinyl coated wallcovering.

## Patentansprüche

1. Fortlaufende Bahn, umfassend der Reihe nach
eine druckempfindliche Klebstoffschicht,
eine Substratschicht, die hydrophiles faserförmiges Material umfaßt,
eine dekorative Oberflächenschicht und
eine Ablöseoberfläche, wobei die Bahn durch aufeinanderfolgendes Wickeln zu einer Rolle aufgewickelt ist, wobei die Klebstoffschicht einer Windung auf der Ablöseoberfläche der benachbarten Windung aufgenommen wird,
dadurch gekennzeichnet, daß die anfängliche Haft-(Ablöse-) Festigkeit der Bahn an Stahl nicht größer als 7 N/25 mm ist und die Haftung (Ablösung) an Stahl nach 24-stündiger Verweilzeit größer ist als die anfängliche Haftung und mindestens 5 N/25 mm und nicht mehr als 12 N/25 mm beträgt, die innere Delaminierungsfestigkeit des Substrats größer ist als die anfängliche Haftfestigkeit und der Klebstoff so weichmacherbeständig ist, daß der Klebstoff nach 3-wöchigem Kontakt desselben bei 23±2°C und 55±2% rF als Schicht mit einem Trockengewicht von 30 g/m² mit einer PVC-beschichteten Wandbedeckung, die ein Trockenauftragsgewicht von 90 g/m² aufweist und Weichmacher in einer Menge von mindestens 20 Gew.-% umfaßt, mindestens 70% seiner Haftfestigkeit beibehält.

2. Fortlaufende Bahn nach Anspruch 1, worin der Klebstoff weichmacherbeständig ist, so daß er nach dem Kontakt mindestens 90% seiner Haftung beibehält.

3. Fortlaufende Bahn nach Anspruch 1 oder Anspruch 2, worin sich die Haftfestigkeit der Bahn auf Vinyl-Oberflächen schneller aufbaut als auf Nicht-Vinyl-Oberflächen.

4. Fortlaufende Bahn nach irgendeinem vorhergehenden Anspruch, worin die druckempfindliche Klebstoffschicht eine Cascotak ADP 21-494-Acrylemulsion umfaßt.

5. Fortlaufende Bahn nach irgendeinem vorhergehenden Anspruch, worin die Ablöseoberfläche durch Silicon, vorzugsweise mit einem Trockengewicht von mindestens 1 g/m², bereitgestellt wird.

6. Fortlaufende Bahn nach irgendeinem vorhergehenden Anspruch, worin das Substrat ein dimensionsstabiles Substrat umfaßt.

7. Fortlaufende Bahn nach irgendeinem vorhergehenden Anspruch, welche eine Breite von mehr als 200 mm, vorzugsweise mehr als 300 mm, aufweist.

8. Fortlaufende Bahn nach irgendeinem der Ansprüche 1 bis 5, welche eine Breite von bis zu 0,25 m aufweist.

9. Fortlaufende Bahn nach irgendeinem vorhergehenden Anspruch, worin die dekorative Oberflächenschicht eine Schicht aus einem Kunststoffmaterial, vorzugsweise PVC umfassend, einschließt, die durch Laminierung einer vorher hergestellten Folie oder, vorzugsweise, durch Auftragen einer flüssigen Zusammensetzung, vorzugsweise eines Plastisols, auf die Bahn aus hydrophilem Substratmaterial aufgebracht wird.

10. Verfahren zur Verwendung einer Bahn nach irgendeinem vorhergehenden Anspruch, worin die Bahn von der Rolle abgewickelt wird und die Klebstoffschicht an einer Polymerbeschichteten Wandbedeckung, vorzugsweise einer Vinylbeschichteten Wandbedeckung, angeklebt wird.

## Revendications

1. Bande continue comprenant successivement
une couche d'adhésif sensible à la pression,
une couche de substrat qui comprend un matériau fibreux hydrophile,
une couche de surface décorative et
une surface de séparation,
la bande étant enroulée en un rouleau par enroulements consécutifs, la couche d'adhésif d'un enroulement étant reçue sur la surface de séparation de l'enroulement adjacent,
caractérisée en ce que la force d'adhérence (résistance au détachement) initiale de la bande à l'acier n'est pas supérieure à 7N/25mm et la force d'adhérence (résistance au détachement) à l'acier après une pause de 24 heures est supérieure à l'adhérence initiale et est d'au moins 5N/25mm et pas supérieure à 12N/25mm, la résistance à la délamination interne du substrat est supérieure à la force d'adhérence initiale et l'adhésif est résistant au plastifiant de telle sorte que l'adhésif conserve au moins 70% de sa force d'adhérence après un contact de l'adhésif comme une couche ayant un poids à sec de 30g/m² avec un revêtement mural revêtu de PVC ayant un poids de revêtement à sec de 90g/m² et comprenant un plastifiant dans une quantité d'au moins 20% en poids à 23 ± 2°C pendant 3 semaines, à une humidité relative RH de 55 ± 2%.

2. Bande continue selon la revendication 1, dans laquelle l'adhésif est résistant au plastifiant pour conserver au moins 90% de son adhérence après ledit contact.

3. Bande continue selon la revendication 1 ou la revendication 2, dans laquelle la bande à une vitesse de constitution de la force d'adhérence supérieure sur des surfaces vinyliques que sur des surfaces non vinyliques.

4. Bande continue selon l'une quelconque des revendications précédentes, dans laquelle la couche d'adhésif sensible à la pression comprend une émulsion acrylique Cascotak ADP 21-494.

5. Bande continue selon l'une quelconque des revendications précédentes, dans laquelle la surface de séparation est fournie par du silicone ayant de préférence un poids à sec d'au moins 1g/m².

6. Bande continue selon l'une quelconque des revendications précédentes, dans laquelle le substrat comprend un substrat dimensionnellement stable.

7. Bande continue selon l'une quelconque des revendications précédentes ayant une largeur supérieure à 200 mm, de préférence supérieure à 300 mm.

8. Bande continue selon l'une quelconque des revendications 1 à 5 ayant une largeur allant jusqu'à 0,25 mm.

9. Bande continue selon l'une quelconque des revendications précédentes, dans laquelle la couche de surface décorative comprend une couche de matériau plastique, comprenant de préférence du PVC, appliquée sur la bande de matériau de substrat hydrophile par stratification d'un film préformé ou de préférence par application d'une composition liquide, de préférence d'un plastisol.

10. Procédé d'utilisation d'une bande selon l'une quelconque des revendications précédentes, dans laquelle la bande est déroulée à partir du rouleau et la couche d'adhésif adhère à un revêtement mural revêtu de polymère, de préférence un revêtement mural revêtu de vinyle.
